**Europäisches Patentamt**

(19) **European Patent Office**

**Office européen des brevets**

(11) Publication number : **0 386 990 B1**

# (12) EUROPEAN PATENT SPECIFICATION

(45) Date of publication of patent specification :
22.11.95 Bulletin 95/47

(51) Int. Cl.⁶ : **H05B 41/29**

(21) Application number : **90302347.1**

(22) Date of filing : **06.03.90**

(54) Operating method and circuit for discharge lamps.

(30) Priority : **08.03.89 US 320736**

(43) Date of publication of application :
**12.09.90 Bulletin 90/37**

(45) Publication of the grant of the patent :
**22.11.95 Bulletin 95/47**

(84) Designated Contracting States :
**DE FR GB IT NL**

(56) References cited :
**US-A- 3 931 544**
**US-A- 4 170 746**
**US-A- 4 373 146**

(73) Proprietor : **GENERAL ELECTRIC COMPANY**
**1 River Road**
**Schenectady, NY 12345 (US)**

(72) Inventor : **Allen, Gary Robert**
**7745 Woodlands Trail**
**Chesterland, Ohio 44026 (US)**
Inventor : **Allison, Joseph Michael**
**2070 Miami Road**
**Euclid, Ohio 44117 (US)**
Inventor : **Davenport, John Martin**
**5128 Edenhurst Avenue**
**Lyndhurst, Ohio 44124 (US)**
Inventor : **Hansler, Richard Lowell**
**28120 Belcourt Road**
**Pepper Pike, Ohio 44124 (US)**

(74) Representative : **Pratt, Richard Wilson**
**London Patent Operation**
**G.E. Technical Services Co. Inc.**
**Essex House**
**12/13 Essex Street**
**London WC2R 3AA (GB)**

EP 0 386 990 B1

## Description

This invention relates to an operating method and circuit for gaseous discharge lamps such as a xenon-metal halide lamp. More particularly, there is disclosed herein a method network and a circuit for acoustically operating a xenon-metal halide lamp especially a xenon-mercury halide lamp, containing a high pressure of xenon which provides such a lamp that is particularly suited for automotive applications.

US-A-3931544 describes an electronic ballast circuit for reducing the warmup time of high intensity discharge lamps.

Our GB-A-2216334 discloses a xenon-metal halide lamp particularly suited for automotive applications. The xenon-metal halide lamp provides improved efficiency and longer life relative to incandescent lamps while a high pressure of xenon gas primarily achieves instant light capabilities making such a lamp particularly suited for the automotive applications.

Our GB-A-2216350 discloses a ballast circuit for operating metal halide lamps including the xenon-metal halide lamps of GB-A-2216334. That circuit operates the metal halide lamps at a relatively high frequency operation of about 1 to 10 kilohertz and applies a square wave of current to the lamp. The square wave of current results in a square wave of voltage in phase with the current so that the lamp power (current x voltage) is constant allowing for advantageous lamp operation. The operation of such a ballast avoids any acoustic resonance effects because the power is constant in time. U.S. Patent 4,170,746 of Davenport discloses a circuit unlike GB-A-2216350 for operating mercury-metal halide lamps of relatively small dimensions having a volumetric capacity of less than one cubic centimeter. Such a ballast circuit employs acoustic operation of the mercury-metal halide miniature lamps devoid of the high pressure xenon at relatively narrow windows within frequency bands in the range from 10 - 50 kHz.

In a manner similar to GB-A-2216350, U. S. Patents 3,890,537 and 4,042,856 of Park et al and Steigerwald, respectively disclose circuits for gas discharge lamps that avoid acoustic resonance effects during the operation of these lamps.

The various gas discharge lamps and ballast circuits given hereinbefore have limitations related to automotive applications. Of the various lamps, the one more suited for automotive applications is that of GB-A-2216334 but it has practical limitations with regard to the amount of instant light that it may provide which is primarily determined by the pressure of the xenon gas contained within the lamp. In order to obtain a desired high instant light level for such lamps for automotive applications a xenon gas pressure of at least four atmospheres is required. The xenon-metal halide lamps having the xenon gas pressure of at least four (4) atmospheres and operated by known ballast circuits disadvantageously experience strong convection effects which are increased by arranging the lamp in a horizontal manner within an automotive headlamp. The undesired convection causes at least three (3) disadvantages which are: (1) severe bowing of the arc of such lamps having electrode spacings that are greater than about two (2) millimeters; (2) reduced life of such lamps due to the increased hot-spot temperatures; and (3) reduced lamp efficacy or lumens per watt due to the decreased cold-spot temperatures. It is desired that means, such as an operating circuit, be provided that allows for the use of a high pressure xenon-metal halide lamp that provides instant light in automotive applications without experiencing the disadvantages created by convection effects.

US-A-4373146 describes the operation of a high intensity discharge lamp using frequency modulation of a carrier waveform. It describes deleterious effects of acoustic resonance within the arc tube and provides a method of avoiding such resonances.

In addition to the instant light capabilities, it is desired that the light source for automotive applications provide both high beam and low beam illumination. It is desired that means, such as an operating circuit, be provided that allows the high pressure xenon-metal halide lamp to serve as the source of light for high and low beam illumination patterns for the automobile.

There is described herein an operating circuit or method that allows the use of a high pressure xenon gas within a xenon-metal halide lamp to yield a high level of instant light which is particularly suited for automotive or vehicle applications. Moreover, it allows a high pressure xenon-metal halide lamp to serve as a light source for low and high beam illumination pattern of a vehicle.

The present invention is directed to a circuit and a method for operating a gaseous discharge lamp such as a high pressure xenon-metal halide lamp which is particularly suited for automotive applications. In presently envisaged embodiments:

According to a first aspect of the invention, there is provided a method of operating a miniature high pressure metal vapor discharge lamp of a kind comprising an envelope defining a discharge space having a volume not exceeding approximately 1 cubic centimeter, a pair of electrodes in the envelope and defining an arc gap, and a fill comprising mercury, metal halides and xenon gas, characterized by said method comprising applying a current having an alternating component causing instantaneous variations in input power across the elec-

2

trode gap, said variations in power being at a frequency selected in a preferred band within the range from 20 kHz to 80 kHz, said bend being one in which acoustic resonance excites arc-straightening modes which reduce the effects of gravity-induced convection in the fill.

According to a second aspect of the invention, there is provided a miniature high pressure metal vapor discharge lamp system comprising a lamp and associated operating means, said lamp comprising an envelope defining a discharge space having a volume not exceeding approximately 1 cubic centimeter, a pair of electrodes in the envelope and defining an arc gap, and a fill comprising mercury, metal halides, and xenon gas, and said operating means being characterized by a source of current connected across said electrodes, said source being capable of delivering a current having an alternating component causing instantaneous variations in input power across the electrode gap, said variations in power being at a frequency selected in a preferred band within the range from 20 kHz to 80 kHz, said band being one in which acoustic resonance excites arc-strengthening modes which reduce the effects of gravity-induced convection in the fill.

The invention will now be described in greater detail by way of example with reference to the drawings, in which:

Fig. 1 is an illustration showing the inter-relationship between the xenon pressure and the instantaneous light both related to a xenon-metal halide lamp.

Fig. 2 illustrates the interrelationship between the xenon pressure and the hot-spot temperature associated with a xenon-metal halide lamp for a 60 Hz square wave operation and high frequency operation related to the present invention.

Fig. 3 illustrates the interrelationship between wall loading and the hot-spot temperature and luminous efficacy associated with a xenon-metal halide lamp for high frequency operation related to the present invention.

Fig. 4 consists of Figs. 4(a) and 4(b) respectively illustrating the frequency bands related to high frequency operation and high frequency with modulation operation both for a high pressure xenon-metal halide lamp.

Fig. 5 consist of Fig. 5(a), 5(b), and 5(c) respectively illustrating an unmodulated carrier wave, a modulating signal, and a frequency modulated wave with all signals being related to the operating circuit of the present invention.

Fig. 6 illustrates the frequency spectrum of the signal of the present invention related to a xenon-metal halide lamp.

Figs. 7, 8, 9 and 10 are schematics of a preferred embodiment of the circuit arrangement of the present invention for starting and operating a high pressure xenon-metal halide lamp.

Xenon-Metal Halide Lamp Characteristics Related To Automotive Applications

A dominant limitation affecting the amount of instant light yielded by a xenon-metal halide lamp serving as a light source for automotive or vehicle application, is the pressure of the xenon gas contained within the lamp. To obtain instant light capabilities sufficient to meet the needs of vehicle applications, it is desired to have at least four (4) atmospheres of xenon gas contained in typical 7 by 9 mm prolate-spheroid shaped arc tubes serving as xenon-metal halide lamps. As discussed earlier, such a xenon pressure undesirably creates very strong convection within the xenon-metal halide lamp. Further, to obtain a desired beam pattern for automotive applications, it is desired to orient the metal halide lamp in a horizontal manner which, in turn, causes the strong convection to disadvantageously contribute to arc bowing problems. Still further, for automotive applications, in order to obtain a desired beam pattern, it is desired to provide a relatively small image for the light source so that dimensions of less than five millimeters for the spacing between the electrodes of the xenon-metal halide lamp are selected. A short arc gap reduces bowing compared to a long gap. A shorter gap, however, requires higher mercury pressure which increases convection and bowing. The net effect is that a shorter gap reduces bowing even with higher mercury pressure.

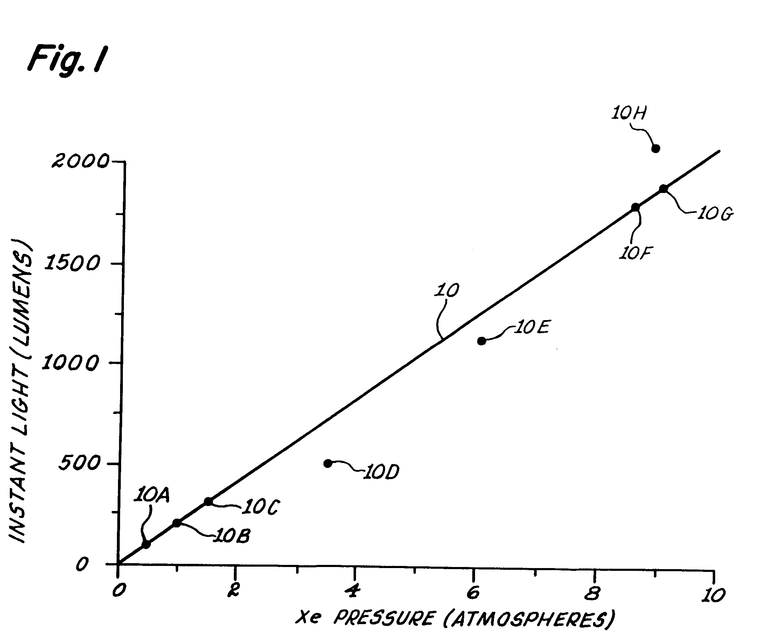

The combination of the high xenon pressure and the mercury pressure within such a lamp produces strong vertical convection in a horizontally oriented lamp resulting in increased hot-spot temperatures on the top of the lamp and cooler temperatures on the bottom of such a lamp. The increased hot-spot and decreased cold-spot temperatures produce a temperature gradient that promotes convection within the lamp which, in turn, creates severe bowing of the arc between the electrodes that are separated longer than about two (2) millimeters. The increased hot-spot temperature on the top of the lamp decreases or shortens the life of such a lamp, while, the decreased cold-spot temperature on the bottom of the lamp reduces the halide pressure therein and thereby reduces the lamp efficacy or lumens per watt. Further, the bowed arc condition created by the high-pressure xenon gas and the high pressure of mercury gas diminishes the optical quality of the beam patterns related to automotive applications. The disadvantages created by the high-pressure xenon gas may be further discussed with regard to Fig. 1.

The relationship between the xenon fill pressure within the lamp and the instantaneous light desired for automotive applications is shown in Fig. 1 for a xenon-metal halide lamp comprised of a 7 by 9 mm prolate spheroid arc tube having a separation of electrodes of approximately 4 mm and energized with about 4.5 amperes of current. The X axis of Fig. 1 is related to the xenon fill pressure within the lamp and is given in atmospheres, whereas, its Y axis is related to the instant light, given in lumens, yielded by such a lamp. Fig. 1 illustrates a best-fit type straight line, curve 10, formed from a plurality of points 10A, 10B, ... and 10H. As shown in Fig. 1, the related xenon fill pressure is needed to be of a value of 7 atmospheres in order to yield an instant light output of 1,500 lumens which is desired for an automotive headlamp.

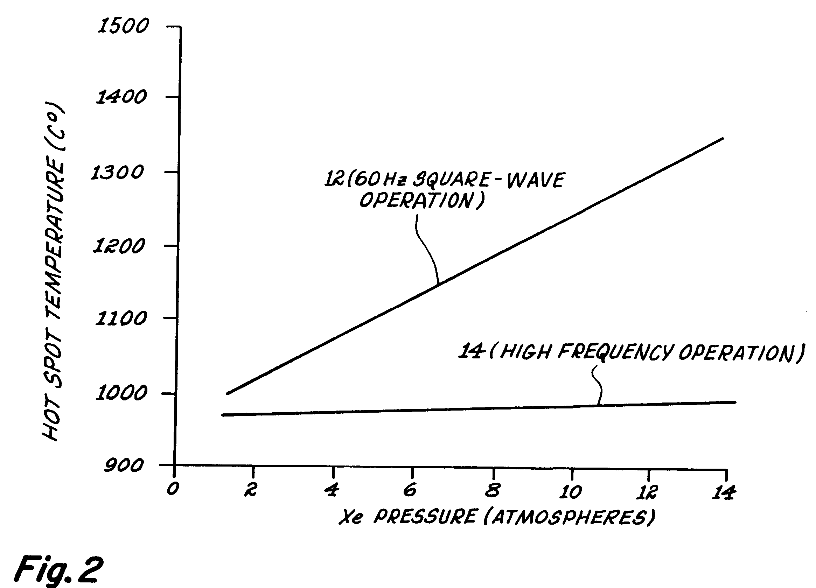

This relatively high pressure is further increased for the xenon-metal halide lamps of the present invention. Assuming a xenon-mercury halide lamp, the voltage drop of the lamp, typically of a value of 40 volts, is determined primarily by the mercury operating pressure which is about 15 atmospheres for relative small spacing distance of less than 4 millimeters between electrodes used for automotive applications. The high average gas temperature of the lamp when it is operating, increases or adds to the xenon pressure within the xenon-metal halide lamp, therefore yielding a total operating pressure of about 35 atmospheres which when added to the 15 atmospheres of mercury operating pressure results in severe convection problems related to the horizontally burning lamps commonly used in automotive applications. As the xenon gas pressure increases, the upward convection velocity of the hot gases that are contributing to the arc bowing within the arc tube increases and the temperature of the bulb above the arc increases. The effect of such an increase may be discussed with regard to Fig. 2.

Fig. 2 has an X coordinate representing the xenon pressure within the lamp, given in atmospheres, and a Y coordinate representing the hot-spot temperature, given in °C, of the xenon-metal halide lamp. Fig. 2 further illustrates two straight line curves 12 and 14, respectively representative of the operation of a xenon-metal halide lamp by a square-wave ballast circuit operated at 60 Hz in a manner as described in GB-A-2216350, and the operation of the xenon-metal halide lamp by a high frequency operating circuit related to the present invention to be described hereinafter.

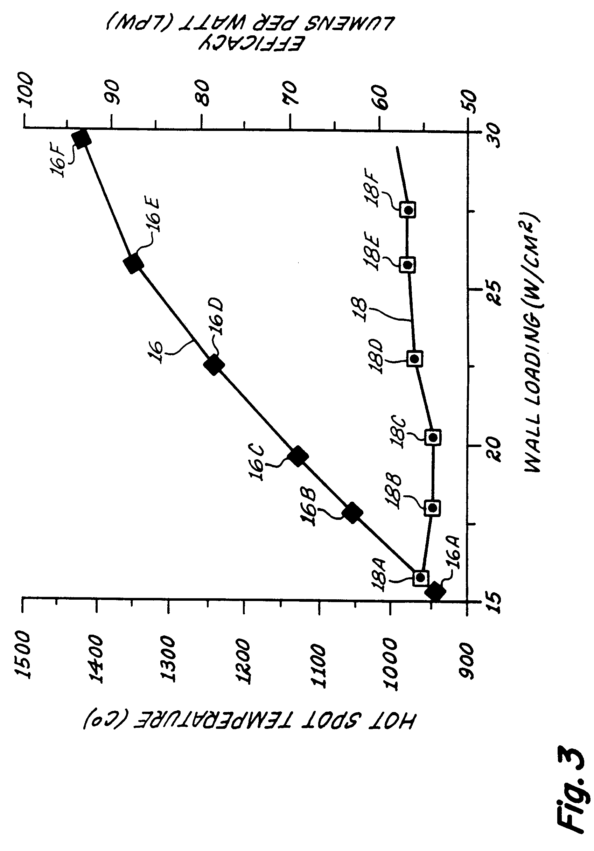

From Fig. 2 related to curve 12, it is seen that a hot-spot temperature of about 1000°C is exceeded for a xenon pressure above about 2 atmospheres, whereas, the hot-spot temperature under high-frequency, arc-straightened operation related to curve 14 does not exceed 1000°C at the desired xenon pressures. Operation of a xenon-metal halide lamp above this 1000°C condition causes the quartz material commonly comprising the related arc tube to deteriorate in a relatively rapid manner. The operation of an arc tube with a temperature less than 1000°C may be further discussed with regard to Fig. 3.

Fig. 3 illustrates the acoustically straightened arc operation related to the present invention of a 6 x 8.5mm prolate-spheriod arc tube with a 3.4mm spacing between electrodes and having 10.3 atmospheres of Xe. Fig. 3 has an X coordinate representative of wall loading, given in watts per square centimeters, and is indicative of the discharge power per arc-tube-wall surface area of the lamp. Fig. 3 has a first and a second Y coordinate respectively representative of the hot spot temperature of the lamp, given in °C, and the efficacy or lumens per watt (LPW) related to the xenon-metal halide lamp. Fig. 3 further illustrates a first curve 16 representative of efficacy vs wall loading operation of the arc tube, and a second curve 18 representative of the hot-spot temperature vs wall loading operation of the arc tube.

From Fig. 3, it is seen that the present invention provides for operating the arc tube at increasing wall loading (curve 18) while maintaining hot-spot temperatures less than approximately 1000°C and thereby yielding increasing efficacy (curve 18) of operation of the arc tube. For example, from Fig. 3 it is seen that the arc tube may be operated at 20 W/cm$^2$ so as to produce an efficacy of 70 LPW which occurs at less than the 1000°C hot-spot temperature.

The practice of the present invention in a specific embodiment thereof may be described with reference to Figs. 2 and 3 and also to Fig. 1. From Fig. 2 it can be seen that if the xenon-metal halide lamp is operated at a high frequency, in a manner and by a circuit arrangement to be described, represented by curve 14, then the xenon gas fill pressure needed to produce 1500 lumens of instantaneous light within the xenon-metal halide lamp results in a hot-spot temperature below the critical value of 1000°C. From Fig. 3, it is seen that wall loading of 20 watts per square centimeter, indicative of a xenon-metal halide lamp having an efficacy of about 70 LPW, is obtained while still maintaining the hot-spot temperature below the critical value of 1000°C. From Fig. 1, it is seen that a xenon fill pressure of 7 atmospheres yields an instant light output of at least 1500 lumens which amount is particularly suited for and more than meets the needs of automotive or vehicle applications.

## Preferred Method of Operating High Pressure Xenon-Metal Halide Lamps

The preferred method of operating a high pressure xenon-metal halide lamp having a xenon pressure sufficiently high to produce instantaneous light for automotive applications comprises the steps of supplying a particular excitation signal and also selecting the parameters of such a signal. The gaseous discharge lamp comprises an envelope having a bulbous portion with a volume between about 0.05 to about 1.0 cubic centimeters. The lamp may have a fill within its bulbous portion comprising a xenon gas having a cold pressure in the range of about 2 to about 15 atmospheres, mercury having an operating pressure in the range of about 5 to about 20 atmospheres and a halide compound of an amount in the range from about 1 to about 5 milligrams. Further, the lamp houses a pair of electrodes respectively located at opposite ends of the envelope and spaced apart from each other by a distance from about 1.5 to about 5 mm. The electrodes are supplied with a sufficient current so as to establish a spot mode operation since glow mode starting is difficult due to the high pressure Xe fill related to the present invention. The current requirements for spot mode operation along with a general discussion of glow mode starting is discussed in U.S. Patent 4,574,219, issued May 4, 1986 of Davenport et al.

The excitation signal may have approximately sinusoidal, triangular, sawtooth or exponential waveform or any composite waveform whose instantaneous power to the lamp is time-varying at a frequency in the 20kHz to 80kHz range. The simplest or representative example of such a waveform is a sinusoidal waveform where the signal V(t) may be represented as;

$$V(t) = Vm \sin[2 * pi * CF * t + (DF/f) * \sin(2 * pi * f * t)] \quad (1)$$

here Vm is the peak voltage;

CF is the carrier frequency;

DF is the maximum frequency excursion from the carrier frequency, and

f is the modulation frequency.

The excitation signal of a triangular, sawtooth, exponential or composite waveshape is similarly represented as functions of CF, DF and f with the same interpretation for each variable, but the instantaneous voltage varies linearly, or in a step manner, or exponentially or in some composite manner in each respective situation.

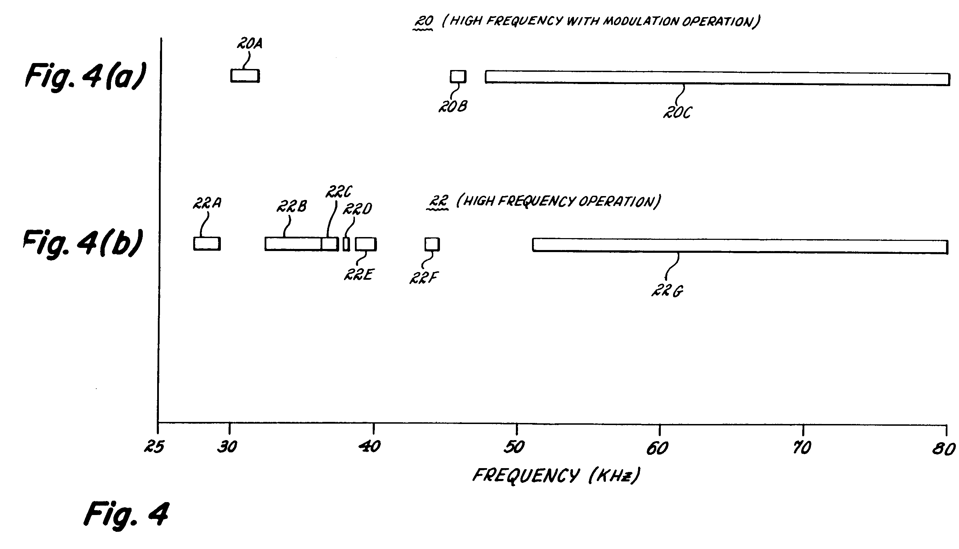

The high-pressure xenon-metal halide lamp may be operated by various methods in accordance with the present invention related to the selection of the parameters of the excitation signal of expression (1). For the signal given in expression (1), the quantity f may be preferably in the range from about 0.01 x CF to about 0.05 x CF. Similarly, the quantity DF may be of a value in the range from about 0.07 x CF to about 0.20 x CF. Further, the quantity CF may have a value in the range of about 20 kHz to about 80 kHz. If desired, the xenon-metal halide lamp may be operated without frequency-modulation by selecting f and DF to have a value of zero (0) and CF to have a value in the range of about 20 kHz to about 80 kHz. The various methods related to the present invention may be further described with reference to Fig. 4.

Fig. 4 has an X coordinate given in kilohertz and is representative of the carrier frequency (CF) of the excitation signal of expression (1), applied to the high pressure xenon-metal halide lamp. Fig. 4 is segmented into Figs. 4a and 4b respectively illustrating a frequency-modulated high-frequency operation 20, that is, the quantity DF of expression (1) having a value in the desired previously given range, and a high-frequency operation 22 without frequency modulation (DF = 0) both operations being related to the high pressure xenon-metal halide lamp. The frequency-modulated high-frequency modulation operation 20 is segmented into portions 20A, 20B, and 20C, which are representative of the frequencies of the excitation signal of expression (1) for which the arc of the xenon halide lamp is unstable. The portions 20A, 20B and 20C represent the unstable arc conditions of flickering and bowing. The high frequency operation 22 without modulation is segmented into portions 22A, 22B, 22C, 22D, 22E, 22F, and 22G which are indicative of the frequencies for the unstable operation of the arc within the xenon-metal halide lamp. The portions 22A - 22F indicate instabilities which cause extinguishing, flickering, or bowing of the arc. The frequencies not encompassed by the portions 20A - 20F are representative of bands of frequencies or windows for which the arc operates in a straight and stable manner.

A comparison between Figs. 4a and 4b reveals that the high frequency with modulation operation 20 of Fig. 4a provides a relatively large window of arc stability represented by the spacing between portions 20A and 20B for stable operation of the lamp, whereas, Fig. 4b shows a plurality of frequency windows but none having the wide coverage of the window in 20.

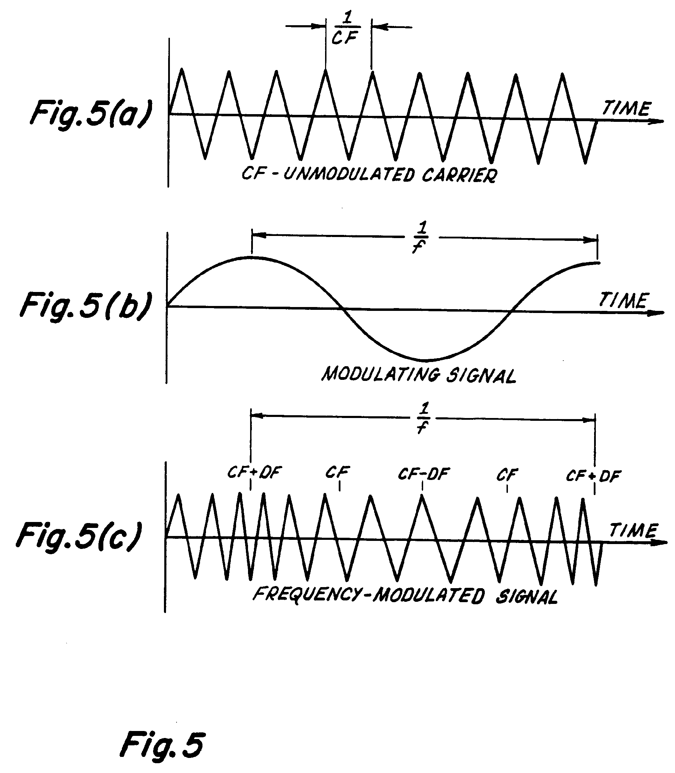

With regard to Fig. 4a, we have discovered that the high-frequency operation 20, of the xenon-metal halide lamp significantly reduces the gravity-induced convection ordinarily encountered with such xenon-metal halide lamps having a xenon fill pressure in excess of two (2) atmospheres. The behavior of the xenon-metal halide lamp of Fig. 4a is quite different from a metal halide lamp operated by the circuit of the previously mentioned U. S. Patent 4,170,746. The effect of the operation shown in Fig. 4a is to acoustically operate the xenon- metal halide lamp in such a manner that the upper wall temperatures of the related lamps are reduced by about 200°C, and the efficacy is doubled relative to 60 cycle operation previously discussed relative to Fig. 2, while at the same time the gravity-induced convection is substantially reduced even to the point of arc straightening conditions. The arc straightening is primarily achieved due to the dominance of the acoustic motion of the xenon and mercury over the vertical convection which otherwise would bend the arc between the electrodes in an upward manner. The frequency window of the stable, straightened arc in the operation 20 corresponds to the presence of acoustic perturbations of the gas which symmetrically force the arc to the center of the arc tube, rather than asymmetrically toward the wall of the arc tube. The widest stable band (SB) of operation without frequency modulation, related to Fig. 4(b), between instabilities is about 5 kHz, or about 10% of the carrier frequency (CF) of expression (1). With regard to Fig. 4(a), with frequency modulation, the stable band of operation representative of the spacing between portions 20A and 20B may be of a value SB/CF of between 30% to 50%. The acoustical operation of a xenon-metal halide lamp supplemented with a frequency modulated signal and represented by operation 20 of Fig. 4(a) may be further described with reference to Fig. 5.

Fig. 5 is segmented into Figs. 5(a), 5(b), and 5(c) respectively representative of: (a) the unmodulated carrier frequency, CF, given in expression (1) as a sinewave, but represented for simplicity as a triangular wave, (b) the modulating signal at frequency f also given in expression (1), and (c) the frequency-modulated signal representative of the V(t) of expression (1). The periods of the CF unmodulated carrier and f modulating signal are shown in Figs. 5(a), 5(b) and 5(c) as 1/CF and 1/f. Fig. 5(c) also shows the shape of the wave as it passes through the maximum (CF + DF), median (CF) and minimum (CF - DF) frequencies.

A preferred method of the present invention is to select an excitation signal as in expression (1) having a sinusoidal, triangular, sawtooth or composite waveshape and to then further select a preferred range for DF and for f so that the arc of the xenon-metal halide lamp is relatively straight. The preferred range of the quantity DF is given in the below expression (2), whereas, the preferred range of the quantity f is given in the below expression (3);

$$0.07 < DF/CF < 0.20 \quad (2)$$
$$0.01 < f/CF < 0.05 \quad (3)$$

The high-frequency modulation operation 20, in particular, a frequency, f, of 0.7 kHz, and a DF quantity of 4.2 kHz were used to operate a prolate ellipsoidal arc tube having an inside minor diameter of 5.8 mm and an inside major diameter of 10.0 mm. The operation resulted in a straight, stable arc over a carrier frequency, CF, in the range extending from 32 kHz to 48 kHz.

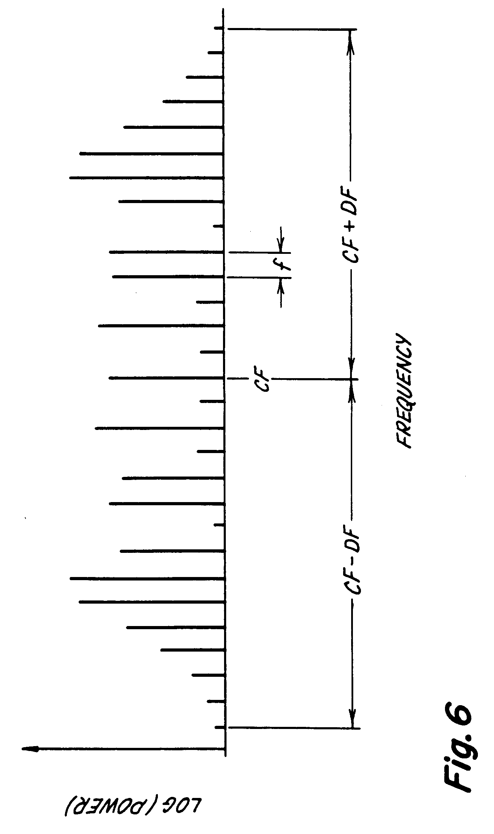

The frequency modulation operation 20 of the present operation may be further described with reference to Fig. 6, illustrating the frequency spectrum of an excitation signal of expression (1), which may be applied to the high-pressure xenon-metal halide lamp. Fig. 6, having an X-axis given in frequency and a Y-axis represented in the log of the power, shows the acoustic power distributed over many discrete frequencies, F, throughout a range of (CF - DF) < F < (CF + DF). The discrete frequency components are separated by an amount equal to f, and the half-width at half-maximum (3db) points of the spectrum roughly equal DF, when DF/f is much greater than 1. If most of the power delivered to the lamp is at stable frequencies, as shown in Fig. 4(a), then the arc instabilities are avoided. In order to significantly spread the acoustic power, the width, 2*DF, of the frequency spectrum should exceed the width of the unstable frequency bands (typically having a value of a few kilohertz), but must not exceed the width of the region where straight, stable operation is found (typically 10-20 kHz wide). Furthermore, if the frequency modulation signal, f, is too large, then there will be too few frequency components, and too much power may be present in each (potentially unstable) component. The smaller the value of f is, the larger the number of frequency components which deliver the acoustic power and the less likely that an instability will be excited. The preferred value of f is in the range given by expression (3). The selection of the lower limit of f may be further discussed with regard to Fig. 5.

With reference to Figs. 5(b) and 5(c) and assuming a frequency, F, related to the excitation signal of expression (1), it is seen that the applied frequency, F, is changing from (CF - DF) to (CF + DF) (Fig. 5(c)) in a duration of one half 1/f (Fig. 5(b)). As the applied frequency F is swept from a stable frequency band (See Fig. 4(a), between 20A, and 20B) through an unstable band of width UB, the instability is being driven for a time T = UB/4fDF. By "instability being driven" it is meant that an undesirable motion that is either bowing or flickering is created or "turned-on" and allowed to grow bigger for a time, T. In order for the instability to grow to an appreciable amplitude to create an undesired operational condition , for example, a bowed, flickering or extinguished arc, the lamp must be driven for many oscillation periods (of length 1/F), such that F*T is much greater than 10. Typically, UB has a value of approximately 2 kilohertz, f has a value of approximately 0.7 kilohertz, DF has a value of approximately 4.2 hertz, and F has a value of approximately 40 kilohertz so that the quantity F*T is approximately 6. Because of the relative quickness with which F is scanned through the unstable band, the instability is allowed to grow for only approximately 6 oscillations, in this example, for the values of UB, f, DF and F previously given, and the amplitude of the instability remains imperceptible. From our analysis, it is apparent that when the sweep rate, that is, the quantity f·DF becomes too low, and the frequency is allowed to linger in the unstable bands (See Fig. 4(a) 20A, 20B and 20C) for an excess of time. Therefore, there is a lower limit of f of a few hundred Hertz. Furthermore, as we have experimentally observed, the triangular or sawtooth waveforms for the frequency modulation at frequency, f, are preferred to the sinusoidal waveform, since then the frequency of the triangular and sawtooth waveforms does not dwell at the maximum and minimum frequencies corresponding to (CF + DF) and (CF - DF) of Fig. 5(c) which would otherwise allow growth times at potentially unstable frequencies.

All of the frequencies (CF, DF and f) are observed to scale inversely with linear dimensions of the arc tube, serving as the xenon-metal halide lamp, requiring higher frequencies for small arc tubes and vise versa, but the wide stable band (SB/CF approximately 30% to 50%) is obtained for miniature xenon-metal halide lamps having arc tubes with volumetric capacity of less than 0.3 cubic centimeters and having all types of geometric shapes studied including spheres, prolate spheroids and cylinders.

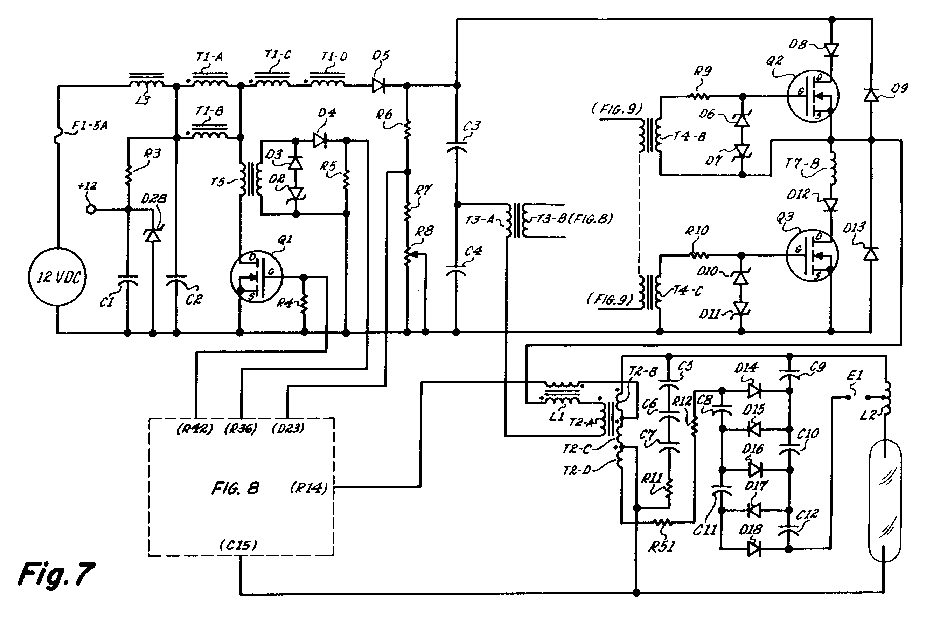

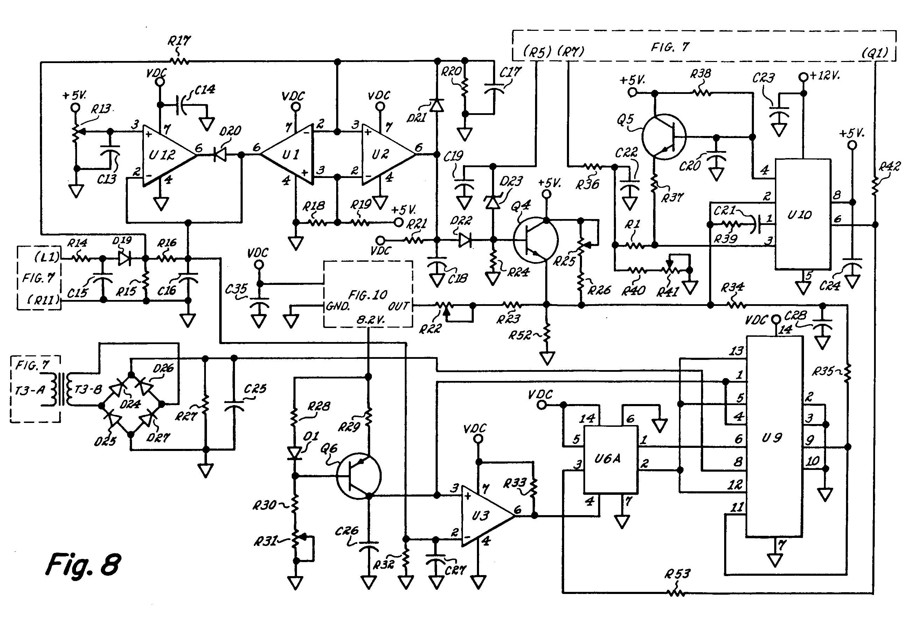

A preferred embodiment of the present invention is schematically illustrated in Figs. 7, 8, 9 and 10 for an operating circuit related to a gaseous discharge 60 which is started by a starter circuit primarily illustrated in Fig. 7. Figs. 7, 8, 9 and 10 are composed of various components of a typical value or type as designated Table 1.

EP 0 386 990 B1

## TABLE 1

| DESIGNATOR | DESCRIPTION | VENDOR |
|---|---|---|
| D5,D8,D12 | fast recovery diode MUR1540 400V 15A | MOTOROLA |
| D9,D13 | fast recovery diode UES 1306 | UNITRODE |
| D1,D20,D21, D24,D25,D26 D27,D22 | high speed switching IN4148A | DIODES INC. |
| D3,D4,D19 | fast recovery diode UES 1106 | UNITRODE |
| U1-U3 | comparator TL331 | T.I. |
| U5-U12 | op amp TL1321 | T.I. |
| U6 | flip flop dual D MC14013B | MOTOROLA |
| U7-U13 | cmos timer 7555 | INTERSIL |
| U9 | analog switch MC14066CP | MOTOROLA |
| U10 | pulse width modulator UC3843N | UNITRODE |
| Q1 | N-channel HEXFET IRFP250 | I.R. |
| Q2-Q3 | N-channel HEXFET IRFP350 | I.R. |
| Q4-Q5 | npn transistor 2N2222 | |
| Q6 | pnp transistor 2N2907 | |
| D6,D7,D10, D11 | zener diode 15v 1/2w | |

8

| | | |
|---|---|---|
| D23 | zener diode<br>6.2v 1/2 w | |
| D2 | zener diode<br>130V 1/2W<br>1M130Z | MOTOROLA |
| D28 | zener diode<br>130V 1/2W<br>1M130Z | |
| R41 | 1k 1/2 w<br>3386P | BOURNS |
| R8 | potentiometer<br>5k 1/2w<br>3386P | BOURNS |
| R25,R22,R31,<br>R47,R13 | potentiometer<br>10k 1/2 w<br>3386P | BOURNS |
| R49 | potentiometer<br>100k 1/2 w<br>3386P | BOURNS |
| C2 | 4700mf 35v | |
| C3,C4 | capacitor<br>electrolytic<br>56mf 200v<br>673D | SPRAGUE |
| R43 | potentiometer<br>50k 1/2w<br>3386P | BOURNES |
| C1,C33,C18 | capacitor<br>electrolytic<br>100mf 25v | PANASONIC |
| C13,C14,C23,<br>C24 | capacitor<br>.1mf 50v<br>CKRO5BX 104KR | SFE TECHNOLOGIES |
| C25 | capacitor<br>electrolytic<br>10mf 25v | PANASONIC |
| C15 | capacitor<br>disc<br>130pf 1kv | |

| | | |
|---|---|---|
| C28 | capacitor electrolytic 4.7mf 50v | PANASONIC |
| C26 | capacitor non ceramic .002mf | |
| C20 | capacitor non-ceramic .01mf | SFE TECHNOLOGIES |
| C22 | capacitor 330pf | |
| C21,C34 | capacitor .47mf 50v CKR06BX47KR | SFE TECHNOLOGIES |
| C35 | capacitor 47mf, 16v | |
| C31 | capacitor .033mf CKR05BX333KR | SFE TECHNOLOGIES |
| C17,C19 | capacitor .0012mf100v CKR0BX122KR | SFE TECHNOLOGIES |
| C16 | capacitor 2.2mf | |
| C30 | capacitor .15mf | |
| C27 | capacitor .022mf | |
| R9,R10,R42 | resistor carbon film 10 1/4w | |
| R6 | resistor carbon film 330k 1/4w | |
| R7 | resistor carbon film 6.8k 1/4w | |
| R35 | resistor carbon film 4.7k 1/4w | |

| | |
|---|---|
| R14 | resistor carbon film 2.2k 1/2w |
| R15 | resistor carbon film 5.6k 1/2w |
| R3 | 3.9 ohm 1/2 w |
| R16 | resistor carbon film 33k 1/4w |
| R27 | resistor carbon film 47 1/4w |
| R19 | resistor carbon film 15k 1/4w |
| R4,R39,R18, R26 | resistor carbon film 10k 1/4w |
| R21,R24 | resistor carbon film 100k 1/4w |
| R32 | resistor carbon film 120k 1/4w |
| R1,R23,R34, R36 | resistor carbon film 1k 1/4w |
| R37,R28,R29, R33 | resistor carbon film 3.9k 1/4w |
| R5 | resistor carbon film 6.8 ohm 5% |
| R38 | 5.1k 1/4w |
| R40 | resistor carbon film 390 1/4w |
| R46 | resistor carbon film 2.2k 1/4w |

| | | |
|---|---|---|
| R48 | resistor<br>carbon film<br>5.6k 1/4w | |
| R17 | resistor<br>carbon film<br>560k 1/4w | |
| R20 | resistor<br>carbon film<br>68k 1/4w | |
| R30 | resistor<br>carbon film<br>18k 1/4w | |
| T1 | transformer/inductor<br>26 turns<br>quadfilar wound. 60 uh per winding<br>bobbin pin out<br>dot7-6 green<br>dot9-4 amber<br>dot11-1 red<br>all pins on<br>.200" centers except<br>1-2 is .150" center | |
| T4 | pulse transformer<br>PE 63387 | PULSE ENGINEER INC |
| T3,T5,T6,<br>T7 | current transformer<br>100:1 | |
| L1 | Inductor<br>35uh | |
| T4 | transformer | SIGNAL TRANSFORMER |
| S1 | toggle switch<br>20A SPST<br>90-0002 | McGILL |
| R61 | 180 | |
| R62 | 4.2M | |
| R63 | potentiometer<br>1M | |
| R64 | 100K | |
| R65 | 2K | |
| R66 | 2K | |

| R67 | 2K |
| R68 | 470K |
| R69 | 470K |
| R70 | 100K |
| R71 | potentiometer 1M |
| R72 | 9.1K |
| D41 | zener diode 8.2v |
| D42,D43 and D44 | diodes |
| C41 | 4.7mf |
| C42 | 4.7mf |
| U14 | comparator LF356J |

In general, the circuit arrangements shown in Figs. 7, 8, 9 and 10 generate a frequency-modulated, high-frequency voltage to drive the xenon-metal halide lamp 60 disclosed hereinbefore. The circuit arrangements of Figs. 7-10 are related to supplying the lamp 60 with a composite waveshape which is similar to a sinusoidal or triangular wave, and may be described as having approximately an exponential shape. The frequency is in the range of 10 kHz-200 kHz. The frequency modulation (DF/CF) is about 10% and the modulation rate is such as to allow the frequency to stay in the stable band previously discussed. The waveshape is further characterized to obtain stable operation by being continuous, have no appreciable times at zero power, and in which the crest factor (ratio of PEAK to RMS) is less than 2:1. The circuit arrangements of Figs. 7, 8, 9 and 10 provide sufficient voltage and current to instantly break down the lamp 60, even when hot, and transition it into a sustained arc condition.

For one embodiment, the operating circuit of Figs. 7-10 is adapted to be connected to a source of alternating current (a.c.) excitation 52 typically of a value of 120 volts at a frequency of 60 Hz. For another embodiment, the operating circuit may be directly connected to a source of direct current (d.c.) eliminating the need of associated rectifying components.

The circuit arrangements of Figs. 7-10 form a ballast for lamp 60 which in one embodiment comprises a two-stage power converter. The input stage at the ballast circuit is a DC-to-DC boost converter while the output stage is a DC-to-AC inverter. The input boost converter is controlled while the output inverter is uncontrolled. Lamp voltage and current are fed back to the input boost converter to regulate lamp power. The output inverter is frequency-modulated. The current flowing within lamp 60 is limited on an instantaneous basis by a linear ballasting inductor while average power is regulated by a controlled DC link voltage.

The major components of the input boost converter are given in Table 2 and are interconnected as shown in the related figures also given in Table 2.

## TABLE 2 — INPUT CONVERTER

| Major Components | Related Figure |
|---|---|
| L3 | 7 |
| Transformers T1 and T5 | 7 |
| Transistor Q1 | 7 |
| Diode D5 | 7 |
| PWM Controller U10 | 8 |

The components of Table 2 and their associated circuitry illustrated in Fig. 7 and 8, comprise a tapped-inductor, current-mode-controlled, DC-to-DC boost converter. The input converter is controlled so that the gas discharge lamp 60 provides for instant light for vehicle applications. Instant light is achieved by the input converter supplying a relatively high wattage (voltage x current) in a ramp-like manner to the lamp 60 at turn-on, and then ramping the power down as the lamp warms up. The turn-on of the lamp having a relatively low impedance occurs after the lamp is started in a manner to be discussed, whereas, the warmed-up condition of the lamp occurs after the lamp is turned-on for a sufficient duration so as to obtain a relatively high impedance value.

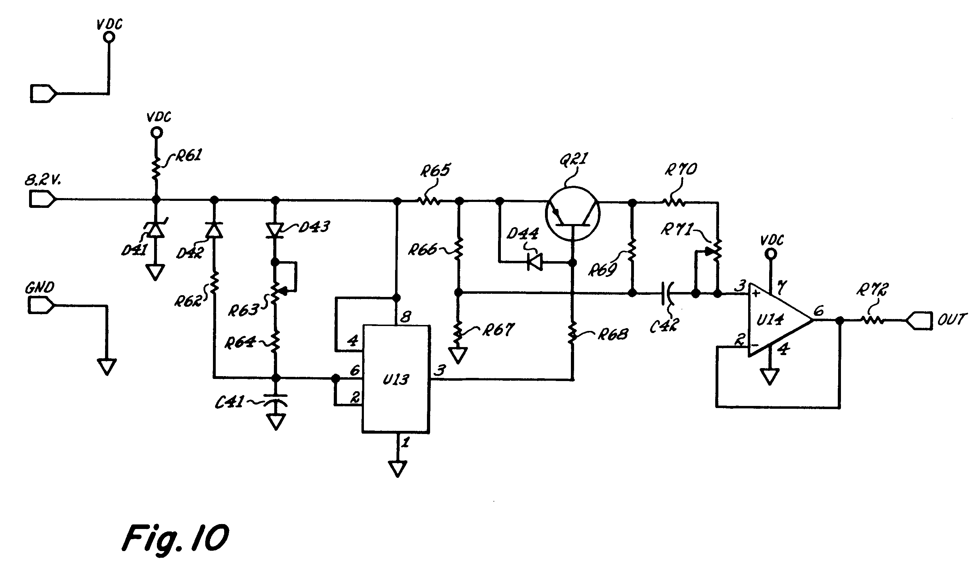

The timer circuit, illustrated in Fig. 10, supplies a ramping current by means of resistors R22 and R23 into the summing node (pin2) of the PWM error amplifier U10. This current ramp is a component of the reference signal that is part of the feedback control system that regulates lamp wattage. In operation, scaled samples of lamp current and voltage are multiplied and fed into the above-mentioned summing node. A negative feedback control system acts to balance the scaled lamp volt-amp product with the ramping reference generated by the arrangement of Fig.10. After warm-up of the lamp 60, the reference to the PWR error amplifier remains constant so as to maintain a constant run or operate power in the lamp. A winding (T2-D) on transformer, T2, provides the lamp voltage sample and current transformer, T3, supplies a scaled representation of the lamp current. These two signals are multiplied using circuit components, Q6, U3, U6-A, U9, and their associated components illustrated in Fig. 8.

The timer of Fig. 10 that supplies the reference signal to the power feedback control loop of Fig. 8 having ramp-like features, has two important characteristics related to the present invention, which are:

1) The output current ramp has a delay feature. That is, the ramp begins after an initial time during which the timer output is at a level condition. This delay feature improves the instant light performance of lamp 60 especially if the source of alternating current (A.C.) connected to the ballast circuit of Figs. 7-10 experiences an interruption;

2) The capacitors C41 and C42, which determine the delay time and ramp rate, discharge relatively slowly after all power is removed from the circuit. When power is removed, then immediately reapplied, the capacitor voltages remain mostly unchanged. This feature obviates the "pulse of light" that otherwise would occur. The slow discharge of the timing capacitors is primarily achieved by the current arrangement of the present invention preferably using insulated-gate integrated circuits that do not have the usual substrate diodes on their inputs.

The major components of the output converter are given in Table 3 and are interconnected as shown in the related figures also given in Table 3.

## Table 3 - Output Inverter

| Major Components | Related Figure |
|---|---|
| Transistors Q2 and Q3 | 7 |
| Drive Logic Integrated Circuits | |
| • U11 | 9 |
| • U4-B | 9 |
| • U7 | 9 |
| • U5 and U8 | 9 |

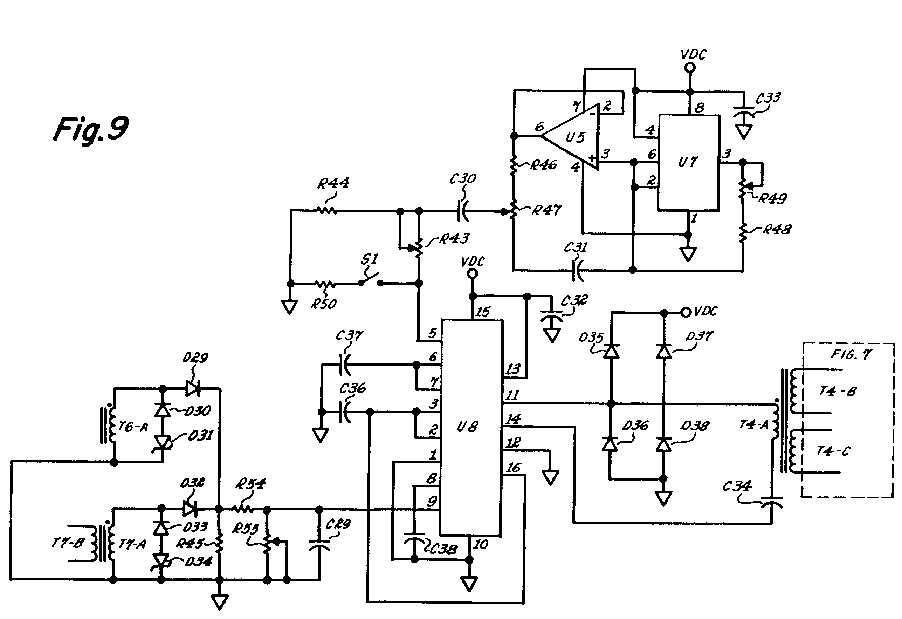

The output inverter incorporates the frequency modulation feature of the present invention having a carrier frequency which may be about 55 kHz that is generated by timer U8 of Fig. 9. The timer U8 has a modulation frequency of about 700 Hz applied to its input 3 and which is generated by timer U7 of Fig. 9. The timer U8 further has a switch S1 cooperating with resister 150 applied to its input pin 7 so as to provide a step change in the carrier frequency that is especially suited for automotive forward illumination applications.

The present embodiment provides the ability of generating various shapes or conditions of the arc between the electrodes of the xenon-metal halide lamp so as to form a concentrated light source for various applications. The ability is provided by a switch (S1) to switch the position of the arc of lamp 60 from a bowed or slightly bowed arc to a substantially perfectly straight arc, which, in turn, may be used to switch the beam pattern emitted from a headlamp reflector having the lamp 60 disposed therein, from a first or low beam to a second or high beam illumination pattern merely by changing the carrier frequency of the arrangement of Fig. 9 by a fixed amount, for example, from 45 kHz to 55 kHz. Other suitable frequency shifts, according to the dimensions and stable windows, previously discussed, of lamp 60 may also be used. For one embodiment, the frequency shift causes the arc within the lamp to change from a straight condition to a bent or bowed condition, and thereby moves the primary concentration of light related to the arc from a first location within the reflector corresponding to the point associated with high beam illumination to a second location within the reflector corresponding to the focal point related to low beam illumination or vice-versa.

This approach to moving the position of the arc is preferable to magnetic deflection of the arc for at least two reasons: a) magnetic deflection may require additional circuitry and hardware, and b) acoustic operation, even in the slightly bowed configuration of the arc, still operates at a reduced hot-spot temperature previously discussed.

Further, this approach to achieving the bowing is accomplished by adjusting the waveform so that it has the proper mixture of a bending mode (fundamental acoustic frequency) and a straightening mode (first even harmonic). This allows the arc to be straightened, bowed or anything in between to provide a wide variety of applications.

The relatively high voltage necessary for initial breakdown and hot restrike of the arc is generated by the circuit arrangement of Fig. 7 utilizing a spark-gap device and comprising a five-stage diode-capacitor voltage multiplier along with a step-up coil that utilizes the open circuit output voltage of the inverter. The components of the breakdown circuit are D14 through D18, C8 through C12, and the step-up coil is L2.

The ballast circuit of Figs. 7-10 develops a first signal serving as an unmodulated signal (see Fig. 5A) and having a selectable carrier frequency (CF). The circuit further develops a second signal serving as a modulating signal (see Fig. 5B). Further, the circuit of Figs. 7-10 by combining the first and second signals develops the excitation signal of expression (1) which is applied to the gaseous discharge lamp 60. The ballast circuit of Figs. 7-10 develops the excitation signal of expression (1) within its ranges of parameters previously discussed by the appropriate selections of the associated circuit components.

It should now be appreciated that we have shown how the present invention can be practised in circuit arrangements which generate a frequency-modulated, high-frequency voltage and current to provide excitation for the high-pressure xenon-metal halide lamp. The circuit arrangements allow for the use of a high-pressure xenon gas within the xenon-metal halide lamp so as to yield a high level of instant light which is particularly suited for automotive or vehicle application. The xenon-metal halide lamp operates at a significantly higher pressure (due to both the xenon and mercury) than for normal metal halide lamps and at significantly higher wall loading than is normally used. In addition, for applications in some optical systems, very short arc gaps, that is spacing between electrodes, are desired, which to achieve reasonable lamp voltages, require even higher mercury pressure than discharge lamps with normal arc lengths. Frequency-modulated high-frequency excitation is preferred to overcome the extraordinarily high convection forces produced by the very high pressures, and this results in a more nearly isothermal lamp which again is desired in order to use the very high wall loading which produces the exceptionally high efficacy not normally possible in compact mercury-metal halide discharge lamps not having xenon such as disclosed in U.S. Patent 4,170,746. If a xenon-metal halide lamp was operated with low-frequency power, the arc would move against the wall and bulging of the arc tube would occur resulting in the failure of the lamp. Moreover by frequency-modulating the high frequency, the acoustic frequency windows can be widened to facilitate a practical design of the xenon-metal halide lamp. The pressure of xenon related to the present invention is sufficiently high that adequate light is produced instantly for applications such as automotive forward lighting. The shape and size of the bulb, and the frequency and frequency modulation are chosen in combination to achieve the lumen output and size of the discharge needed for the specific application and such that with the arc straightened, optimum bulb temperature is obtained so as to vaporize the desired amount of halide and at the same time keeping the maximum bulb temperature low enough to achieve the design life.

It should be further appreciated that the present invention can be used in providing an optical system with a high pressure xenon-metal halide lamp and a ballast circuit, in which the presence of a straight arc and symmetric discharge results from overcoming the extreme effects of convection associated with the extraordinary high pressure. The effects are overcome by controlled acoustic resonance, which produces a uniform light field useful in various types of projection and display systems. In automotive headlamps ordinarily related to the present invention, in which the light is produced by a high pressure xenon-metal halide lamp operated by a frequency-modulated, high frequency ballast, superior performance results from the instant light available by virtue of the presence of the high pressure xenon. The small size and straitness of the light source within the optics of the headlamp, yielded by the small size and more isothermal character of the lamp, result from the overcoming of the very rapid convection by means of the acoustic resonance which is controlled by means of the modulation of the high frequency and the control of the waveshapes in accordance with the preferred practice of the invention.

Still further, in one embodiment the frequency of the excitation signal for the xenon-metal halide lamp is capable of being shifted to cause the arc within the lamp to change from a straight to a bent or bowed condition and thereby move the primary concentration of the light of arc from a first to a second location. These first and second locations are selected to correspond to the points associated with the high and low beam illumination for a vehicle.

## Claims

1. A method of operating a miniature high pressure metal vapor discharge lamp of a kind comprising:

    an envelope defining a discharge space having a volume not exceeding approximately 1 cubic centimeter,

    a pair of electrodes in the envelope defining an arc gap, and a fill comprising mercury, metal halides and xenon gas,

    characterized by said method comprising:

    applying a current having an alternating component causing instantaneous variations in input power across the electrode gap,

    said variations in power being at a frequency selected in a preferred band within the range from 20 kHz to 80 kHz,

    said band being one in which acoustic resonance excites arc-straightening modes which reduce the effects of gravity-induced convection in the fill.

2. The method as claimed in claim 1, wherein said preferred band is one in which acoustic resonance excites a mode effective to reduce gravity-induced bowing of the arc.

3. The method as claimed in claim 1 or 2, wherein the current is alternating with a waveshape which assures time-fluctuations of input power at said selected frequency.

4. The method as claimed in claims 1 to 3, wherein the alternating component of the current through the lamp at said selected frequency is frequency-modulated in order to broaden the width of the band of frequencies in which a straight and stable arc is obtained.

5. The method as claimed in any one of claims 1 to 4, wherein said alternating component may be shifted in frequency between two bands, one band being an arc-straightening band, and the other being a band allowing some arc-bowing with attendant spatial displacement of the light concentration in said lamp.

6. The method as claimed in any one of claims 1 to 5, wherein said variations in power are at a frequency F selected as a center frequency in said preferred band;

said center frequency F is frequency modulated in order to broaden the width of said band,

said frequency modulation being with a frequency deviation DF at a modulating frequency f, DF and f being chosen to maximize the width of said band.

7. The method as claimed in claim 6, wherein the frequency deviation is from 7 to 20% of the center frequency F, and the modulating frequency is from 1 to 5% of the center frequency F.

8. The method as claimed in claims 6 or 7, wherein the frequency deviation is from 7 to 20% of the center frequency F, the modulating frequency is from 1 to 5% of the center frequency F, and the waveform of the modulating frequency envelope inclines to triangular or sawtooth rather than sinusoidal.

9. The method as claimed in any one of claims 1 to 8, practiced on a lamp of said kind wherein the electrodes define a horizontal arc gap parallel to the major axis.

10. A miniature high pressure metal vapor discharge lamp system comprising a lamp and associated operating means, said lamp comprising:

an envelope defining a discharge space having a volume not exceeding approximately 1 cubic centimeter,

a pair of electrodes in the envelope defining an arc gap, and a fill comprising mercury, metal halides, and xenon gas, and said operating means being characterized by:

a source of current connected across said electrodes, said source being capable of delivering a current having an alternating component causing instantaneous variations in input power across the electrode gap,

said variations in power being at a frequency selected in a preferred band within the range from 20 kHz to 80 kHz,

said band being one in which acoustic resonance excites arc-strengthening modes which reduce the effects of gravity-induced convection in the fill..

11. The lamp system as claimed in claim 10, wherein said preferred band is one in which acoustic resonance excites a mode effective to reduce gravity-induced bowing of the arc.

12. The lamp system as claimed in claims 10 or 11, wherein the electrodes define a horizontal arc gap parallel to the major axis.

13. The lamp system as claimed in any one of claims 10 to 12, wherein the current source is capable of delivering alternating current with a wave shape which assures time-fluctuations of input power at said selected frequency.

14. The lamp system as claimed in any one of claims 10 to 13, wherein the alternating component of the current through the lamp causing said power variations at said selected frequency is frequency-modulated in order to broaden the width of the band of frequencies in which a straight and stable arc is obtained.

15. The lamp system as claimed in any one of claims 10 to 15, wherein the envelope of said lamp defines a generally prolate-spheroid discharge space, and wherein the electrodes define a horizontal arc gap parallel to the major axis.

16. The lamp system as claimed in any one of claims 10 to 15, wherein the arc gap is horizontal, and

said variations in power are at a frequency F selected as a center frequency in said preferred band,

said center frequency F being frequency modulated in order to broaden the width of said band,

said frequency modulation being with a frequency deviation DF at a modulating frequency f, DF and f being chosen to maximize the width of said band.

17. The lamp system as claimed in claim 16, wherein the frequency deviation DF is from 7 to 20% of the center frequency F, and the modulating frequency f is from 1 to 5% of the center frequency F.

18. The lamp system as claimed in claims 16 or 17, wherein the frequency deviation is from 7 to 20% of the center frequency F, the modulating frequency f is from 1 to 5% of the center frequency F, and the waveform of the modulating frequency envelope inclines to triangular or sawtooth rather than sinusoidal.

19. The lamp system as claimed in any one of claims 16 to 18, including a headlamp reflector in which said lamp is located, and switch means for step-shifting the carrier frequency from a controlled arc-bowing region to an arcstraightening band, whereby to physically displace the light concentration in said lamp to effect beam-switching.

**Patentansprüche**

1. Verfahren zum Betreiben einer Miniatur-Hochdruck-Metalldampf-Entladungslampe eines Typs, der enthält:

einen Kolben, der einen Entladungsraum mit einem Volumen bildet, das etwa 1 Kubikzentimeter nicht überschreitet,

zwei Elektroden in dem Kolben, die einen Bogenspalt bilden, und eine Füllung, die Quecksilber, Metallhalogenide und Xenongas enthält,

gekennzeichnet durch:

Zuführen eines Stroms mit einer Wechselkomponente, die augenblickliche Änderungen in der Eingangsleistung über dem Elektronenspalt bewirkt,

wobei die Leistungsänderungen bei einer Frequenz auftreten, die in einem bevorzugten Band innerhalb des Bereiches von 20 kHz bis 80 kHz gewählt ist,

wobei das Band ein solches ist, in dem akustische Resonanz Bogen-begradigende Moden anregt, die die Wirkungen der durch Gravitation hervorgerufenen Konvektion in der Füllung verkleinern.

2. Verfahren nach Anspruch 1, wobei das bevorzugte Band ein solches ist, in dem akustische Resonanz eine Mode anregt, die durch Gravitation hervorgerufene Biegung des Lichtbogens verkleinert.

3. Verfahren nach Anspruch 1 oder 2, wobei der Strom mit einer Wellenform wechselt, die Zeitfluktuationen der Eingangsleistung bei der gewählten Frequenz sicherstellt.

4. Verfahren nach einem der Ansprüche 1 bis 3, wobei die Wechselkomponente des Stroms durch die Lampe bei der gewählten Frequenz frequenzmoduliert wird, um die Breite des Frequenzbandes zu verbreitern, in dem ein gerader und stabiler Lichtbogen erhalten wird.

5. Verfahren nach einem der Ansprüche 1 bis 4, wobei die Wechselkomponente in der Frequenz zwischen zwei Bändern verschoben werden kann, wobei das eine Band ein Bogen begradigendes Band ist und das andere Band eine gewisse Bogenbiegung mit einer begleitenden räumlichen Verschiebung der Lichtkonzentration in der Lampe gestattet.

6. Verfahren nach einem der Ansprüche 1 bis 5, wobei die Änderungen in der Leistung bei einer Frequenz F auftreten, die als eine Mittenfrequenz in dem bevorzugten Band gewählt ist,

die Mittenfrequenz F frequenzmoduliert wird, um die Breite des Bandes zu verbreitern,

wobei die Frequenzmodulation mit einer Frequenzabweichung DF bei einer modulierenden Frequenz f auftritt, wobei DF und f so gewählt werden, daß die Breite des Bandes maximiert wird.

7. Verfahren nach Anspruch 6, wobei die Frequenzabweichung von 7 bis 20% der Mittenfrequenz F beträgt und die modulierende Frequenz von 1 bis 5% der Mittenfrequenz F beträgt.

8. Verfahren nach Anspruch 6 oder 7, wobei die Frequenzabweichung von 7 bis 20% der Mittenfrequenz F beträgt, die modulierende Frequenz von 1 bis 5% der Mittenfrequenz F beträgt und die Kurvenform der Hüllkurve der modulierenden Frequenz abgeschrägt ist zu dreieckförmig oder sägezahnförmig anstatt sinusförmig.

9. Verfahren nach einem der Ansprüche 1 bis 8, ausgeführt bei einem Lampentyp, bei dem die Elektroden einen horizontalen Bogenspalt parallel zur Hauptachse bilden.

10. Miniatur-Hochdruck-Metalldampf-Entladungslampensystem mit einer Lampe und einer zugeordneten Betriebseinrichtung, wobei die Lampe enthält:

einen Kolben, der einen Entladungsraum mit einem Volumen bildet, das etwa 1 Kubikzentimeter nicht überschreitet,

zwei Elektroden in dem Kolben, die einen Bogenspalt bilden, und eine Füllung, die Quecksilber, Metallhalogenide und Xenongas enthält, wobei die Betriebseinrichtung gekennzeichnet ist durch:

eine Stromquelle, die mit den Elektroden verbunden ist und einen Strom mit einer Wechselkomponente liefern kann, die augenblickliche Änderungen in der Eingangsleistung über dem Elektrodenspalt herbeiführt,

wobei die Leistungsänderungen bei einer Frequenz auftreten, die in einem bevorzugten Band in dem Bereich von 20 kHz bis 80 kHz gewählt ist,

wobei das Band ein solches ist, in dem akustische Resonanz Bogen-begradigende Moden anregt, die die Wirkungen der durch Gravität hervorgerufenen Konvektion in der Füllung verkleinern.

11. Lampensystem nach Anspruch 10, wobei das bevorzugte Band ein solches ist, in dem akustische Resonanz eine Mode anregt, die durch Gravität hervorgerufenes Biegen des Lichtbogens verkleinert.

12. Lampensystem nach Anspruch 10 oder 11, wobei die Elektroden einen horizontalen Bogenspalt parallel zur Hauptachse bilden.

13. Lampensystem nach einem der Ansprüche 10 bis 12, wobei die Stromquelle Wechselstrom mit einer Kurvenform liefern kann, die Zeitfluktuationen der Eingangsleistung bei der gewählten Frequenz sicherstellt.

14. Lampensystem nach einem der Ansprüche 10 bis 13, wobei die Wechselkomponente des Stroms durch die Lampe, die Leistungsänderungen bei der gewählten Frequenz herbeiführt, frequenzmoduliert ist, um die Breite des Frequenzbandes zu verbreitern, in dem ein gerader und stabiler Lichtbogen erhalten wird.

15. Lampensystem nach einem der Ansprüche 10 bis 15, wobei der Kolben der Lampe einen Entladungsraum in Form eines im allgemeinen gestreckten Rotationsellipsoid und die Elektroden einen horizontalen Lichtbogenspalt parallel zu der Hauptachse bilden.

16. Lampensystem nach einem der Ansprüche 10 bis 15, wobei der Lampenspalt horizontal ist und

die Leistungsänderungen bei einer Frequenz F auftreten, die als eine Mittenfrequenz in dem bevorzugten Band gewählt ist,

die Mittenfrequenz F frequenzmoduliert ist, um die Breite des Bandes zu verbreitern,

wobei die Frequenzmodulation mit einer Frequenzabweichung DF bei einer modulierenden Frequenz f auftritt, wobei DF und f so gewählt sind, daß die Breite des Bandes maximiert ist.

17. Lampensystem nach Anspruch 16, wobei die Frequenzabweichung DF von 7 bis 20% der Mittenfrequenz F beträgt und die modulierende Frequenz f von 1 bis 5% der Mittenfrequenz F beträgt.

18. Lampensystem nach Anspruch 16 oder 17, wobei die Frequenzabweichung von 1 bis 20% der Mittenfrequenz F beträgt, die modulierende Frequenz f von 1 bis 5% der Mittenfrequenz F beträgt und die Kurvenform der Hüllkurve der modulierenden Frequenz abgeschrägt ist zu dreieckförmig oder sägezahnförmig anstatt sinusförmig.

19. Lampensystem nach einem der Ansprüche 16 bis 18, enthaltend einen Frontlampenreflektor, in dem die Lampe angeordnet ist, und eine Schalteinrichtung zum schrittweisen Verschieben der Trägerfrequenz von einem gesteuerten Bogen-biegenden Bereich zu einem Bogen-begradigenden Band, um dadurch die Lichtkonzentration in der Lampe physikalisch zu verschieben, um ein Bündelumschalten herbeizuführen.

## Revendications

1. Procédé de commande d'une lampe à décharge miniature à vapeurs métalliques à haute pression d'un type comprenant:

une enveloppe définissant un espace de décharge ayant un volume ne dépassant pas environ 1 centimètre-cube,

une paire d'électrodes, disposées dans l'enveloppe et définissant un intervalle de formation d'arc, et un milieu de remplissage comprenant du mercure, des halogénures métalliques et du gaz xénon,

caractérisé en ce que ledit procédé comprend:

l'application d'un courant comportant une composante alternative provoquant des variations instantanées de la puissance d'entrée dans l'intervalle entre les électrodes,

lesdites variations de puissance ayant lieu à une fréquence sélectionnée dans une bande préférée comprise entre 20 kHz et 80 kHz,

ladite bande étant une bande dans laquelle une résonance acoustique excite des modes de redressement d'arc qui réduisent les effets de la convexion induite par gravité dans le milieu de remplissage.

2. Procédé selon la revendication 1, dans lequel ladite bande préférée est une bande dans laquelle la résonance acoustique excite un mode efficace pour réduire la courbure de l'arc, induite par gravité,

3. Procédé selon la revendication 1 ou 2, dans lequel le courant est un courant alternatif ayant une forme d'onde qui assure des fluctuations, dans le temps, de la puissance d'entrée à ladite fréquence sélectionnée.

4. Procédé selon les revendications 1 à 3, dans lequel la composante alternative du courant traversant la lampe à ladite fréquence sélectionnée est modulée en fréquence afin que soit augmentée la largeur de la bande de fréquence dans laquelle un arc rectiligne et stable est obtenu.

5. Procédé selon l'une quelconque des revendications 1 à 4, dans lequel ladite composante alternative peut être décalée en fréquence entre deux bandes, une des bandes étant une bande dans laquelle l'arc est redressé et l'autre bande étant une bande permettant une certaine courbure de l'arc avec un déplacement spatial consécutif de la concentration de lumière dans ladite lampe.

6. Procédé selon l'une quelconque des revendications 1 à 5, dans lequel lesdites variations de puissance ont lieu à une fréquence F sélectionnée comme fréquence centrale dans ladite bande préférée;

ladite fréquence centrale F est modulée en fréquence afin que la largeur de ladite bande soit augmentée,

ladite modulation de fréquence étant effectuée avec une excursion de fréquence DF à une fréquence de modulation f, DF et f étant choisies de manière à maximiser la largeur de ladite bande.

7. Procédé selon la revendication 6, dans lequel l'excursion de fréquence DF représente 7 à 20% de la fréquence centrale F, et la fréquence de modulation représente 1 à 5% de la fréquence centrale F·

8. Procédé selon la revendication 6 ou 7, dans lequel l'excursion de fréquence DF représente 7 à 20% de la fréquence centrale F, et la fréquence de modulation représente 1 à 5% de la fréquence centrale F, et la forme d'onde de l'enveloppe de la fréquence de modulation a tendance à être triangulaire ou en dents de scie plutôt que sinusoïdale.

9. Procédé selon l'une quelconque des revendications 1 à 8, mis en oeuvre sur une lampe du type précité, dans laquelle les électrodes définissent un intervalle de formation d'arc horizontal, parallèle à l'axe principal.

10. Système de lampe miniature à décharge à vapeurs métalliques comprenant une lampe et des moyens de commande associés, ladite lampe comprenant:

une enveloppe définissant un espace de décharge ayant un volume ne dépassant pas environ 1 centimètre-cube,

une paire d'électrodes, disposées dans l'enveloppe et définissant une intervalle de formation d'arc, et un milieu de remplissage comprenant du mercure, des halogénures métalliques, et du gaz xénon, et lesdits moyen de commande associés étant caractérisés par:

une source de courant connectée entre les électrodes, ladite source étant capable de fournir un courant comportant une composante alternative provoquant des variations instantanées de la puissance d'entrée dans l'intervalle entre les électrodes,

lesdites variations de puissance ayant lieu à une fréquence sélectionnée dans une bande préférée comprise entre 20 kHz,

ladite bande étant une bande dans laquelle une résonance acoustique excite des modes de redressement d'arc qui réduisent les effets de la convexion induite par gravité dans le milieu de remplissage.

11. Système de lampe selon la revendication 10, dans lequel ladite bande préférée est une bande dans laquelle la résonance acoustique excite un mode efficace pour réduire la courbure de l'arc, induite par la gravité.

12. Système de lampe selon la revendication 10 ou 11, dans lequel les électrodes définissent un intervalle de formation d'arc horizontal, parallèle à l'axe principal.

13. Système de lampe selon l'une quelconque des revendication 10 à 12, dans lequel la source de courant est capable de fournir un courant alternatif ayant une forme d'onde qui assure des fluctuations, dans le temps, de la puissance d'entrée à ladite fréquence sélectionnée.

14. Système de lampe selon l'une quelconque des revendications 10 à 13, dans lequel la composante alternative du courant traversant la lampe et provoquant lesdites variations de puissance à ladite fréquence sélectionnée est modulée en fréquence pour augmenter la largeur de la bande de fréquences dans laquelle un arc rectiligne et stable est obtenu.

15. Système de lampe selon l'une quelconque des revendications 10 à 15, dans lequel l'enveloppe de ladite lampe définit un espace de décharge en forme de sphéroïde allongé, et dans lequel les électrodes définissent un intervalle de formation d'arc horizontal, parallèle à l'axe principal;

16. Système de lampe selon l'une quelconque des revendications 10 à 15, dans lequel l'intervalle de formation d'arc est horizontal, et

lesdites variations de puissance ont lieu à une fréquence F sélectionnée comme fréquence centrale dans ladite bande préférée,

ladite fréquence centrale F étant modulée en fréquence afin d'augmenter la largeur de ladite bande,

ladite modulation de fréquence ayant lieu avec une excursion de fréquence DF à une fréquence de modulation f, DF et f étant choisis de manière à maximiser la largeur de ladite bande;

17. Système de lampe selon la revendication 16, dans lequel l'excursion de fréquence DF est comprise entre 7 et 20% de la fréquence centrale F, et la fréquence de modulation f est comprise entre 1 et 5% de la fréquence centrale F.

18. Système de lampe selon les revendications 16 ou 17, dans lequel l'excursion de fréquence représente 7 à 20% de la fréquence centrale F, la fréquence de modulation f représente 1 à 5% de la fréquence centrale F, et la forme d'onde de l'enveloppe de fréquence de modulation a tendance à être triangulaire ou en dent de scie plutôt que sinusoïdale.

19. Système de lampe selon l'une quelconque des revendications 16 à 18, comprenant un réflecteur de phare dans lequel se trouve ladite lampe, et un moyen de commutation pour déplacer par degrés la fréquence porteuse depuis une région commandée de courbure d'arc jusqu'à une bande de redressement d'arc, de manière à déplacer ainsi physiquement la concentration de lumière dans ladite lampe pour effectuer une commutation de faisceau.

Fig. I

EP 0 386 990 B1

Fig.2

EP 0 386 990 B1

Fig. 3

**Fig. 4(a)**

20 (HIGH FREQUENCY WITH MODULATION OPERATION)

20A

20B

20C

**Fig. 4(b)**

22A

22B

22C

22D

22E

22F

22 (HIGH FREQUENCY OPERATION)

22G

25    30    40    50    60    70    80

FREQUENCY (KHz)

**Fig. 4**

Fig.5(a)

$\frac{1}{CF}$

TIME

CF - UNMODULATED CARRIER

Fig.5(b)

$\frac{1}{f}$

TIME

MODULATING SIGNAL

Fig.5(c)

$\frac{1}{f}$

CF+DF    CF    CF-DF    CF    CF+DF

TIME

FREQUENCY-MODULATED SIGNAL

Fig.5

Fig. 6

Fig.7

Fig. 8

EP 0 386 990 B1

29

Fig.9

EP 0 386 990 B1

Fig. 10